# EUROPEAN PATENT APPLICATION

(11) **EP 4 726 951 A1**
(43) Date of publication of application: **15.04.2026**
(21) Application number: 23941294.3
(22) Date of filing: 30.10.2023
(51) Int. Cl.: H02J 7/00, H01M 10/615

(54) **CHARGING AND DISCHARGING CIRCUIT AND METHOD, AND COMPUTING DEVICE AND CONTROL APPARATUS**

(30) Priority: 12.06.2023 CN 202310691523
(71) Applicant: Contemporary Amperex Technology Co., Limited, Ningde, Fujian 352100 (CN)
(72) Inventor: WU, Kai, Ningde, Fujian 352100 (CN); HUANG, Xiaojian, Ningde, Fujian 352100 (CN); CHEN, Wei, Ningde, Fujian 352100 (CN); CHEN, Xing, Ningde, Fujian 352100 (CN); PAN, Xianxi, Ningde, Fujian 352100 (CN)
(74) Representative: Ziebig Hengelhaupt Intellectual Property Attorneys Patentanwaltskanzlei PartGmbB
(86) International application number: PCT/CN2023/127785
(87) International publication number: WO 2024/255070

(57) **Abstract**

Provided in the embodiments of the present application are a charging and discharging circuit and method, and a computing device and a storage medium. Two energy storage elements in the charging and discharging circuit are connected by means of a first adjustment switch module, after a switch is turned on, heating control is performed, and self-heating of a battery is realized by means of an alternating current generated by a charging and discharging loop between a dual-driving electric motor and the battery. The present application can flexibly adjust a charging and discharging loop between a traction battery and an energy storage element without changing the original structure of an electric motor, such that the cost is reduced, and the charging and discharging of a dual-driving electric motor can be flexibly adjusted so as to implement a battery self-heating scheme, thereby increasing a heating rate.

## Description

The present application claims priority to Chinese Patent Application No. 202310691523.4 entitled "CHARGING AND DISCHARGING CIRCUIT AND METHOD, AND COMPUTING DEVICE AND CONTROL APPARATUS THEREFOR" filed on June 12, 2023, the content of which is incorporated herein by reference in its entirety.

### TECHNICAL FIELD

The present application relates to the technical field of batteries, and in particular, to a charging and discharging circuit and method, and a computing device and a storage medium thereof.

### BACKGROUND

Owing to the advantages such as high energy density, rechargeability, high safety, and environmental friendliness, the power modules, such as rechargeable batteries, are widely used in the fields like new energy vehicles, consumer electronics, and energy storage systems. The advancements in battery technology and the diverse demands of different vehicles and usage scenarios have given rise to an increasing range of requirements regarding the battery self-heating performance.

For the dual drive motor application scenarios, the existing battery self-heating solutions are limited and costly. An urgent challenge lies in reducing the battery heating cost and enhancing the heating rate of large-capacity batteries when controlling and implementing battery heating in dual-motor systems.

The above statements are only used to provide background information related to the present application and do not necessarily constitute the prior art.

### SUMMARY

Embodiments of the present application provide a charging and discharging circuit and method, a computing device and a storage medium thereof. The battery self-heating is achieved by utilizing the alternating current generated in the charging and discharging loop between the dual drive motors and the battery. The present application allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

Specifically, by tapping into the neutral points of the motors and then performing heating control by controlling the switch to be turned on for circuit connection, the number of modification points required for dual-motor heating is reduced, thereby reducing the heating cost and improving the battery heating rate.

In a first aspect, the present application provides a charging and discharging circuit. The charging and discharging circuit includes a power module, a first heating module, a second heating module, and a first regulating switch module, where the first heating module and the second heating module are both connected to the power module; the first heating module includes a first energy storage element; the second heating module includes a second energy storage element; the power module includes a plurality of battery branches; the first regulating switch module is connected between the first energy storage element and the second energy storage element.

According to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

The first heating module and the second heating module may be equivalent to two drive motor sets. The first regulating switch module enables the first energy storage element in one motor set to be connected to the second energy storage element in the other motor set. Thus, in the dual drive motor scenarios, the charging and discharging loop between the power battery and the energy storage elements are flexibly regulated to achieve the battery self-heating in a dual-motor configuration. By flexibly adjusting the charging and discharging of the power module through regulating the first switch module and the second switch module in the two motor sets, the self-heating method of the power battery is flexibly adjusted to accommodate the heating requirements under diverse scenarios.

In some embodiments, the first regulating switch module is connected between the neutral point of the motor winding of the first energy storage element and the neutral point of the motor winding of the second energy storage element.

According to the charging and discharging circuit provided in the embodiments of the present application, the circuit heating control is achieved by tapping into the neutral points of the motors and then turning on the first regulating switch module for circuit connection. This reduces the number of modification points required for dual-motor heating and reduces the heating cost, but also improves the battery heating rate. This also enables the flexible adjustment of charging and discharging of the dual drive motors for battery self-heating while reducing costs, thereby meeting the heating requirements under diverse scenarios.

In some embodiments, the power module includes a first battery and a second battery that are connected; the first battery is connected to the first heating module; the second battery is connected to the second heating module.

According to the charging and discharging circuit provided in the embodiments of the present application, the power module includes two battery branches, namely the first battery and the second battery. In the dual drive motor scenarios, the charging and discharging loop between the two batteries and the energy storage elements can be flexibly regulated to achieve the battery self-heating in a dual-motor configuration. By flexibly adjusting the charging and discharging of the power module through regulating the first switch module and the second switch module in the two motor sets, the self-heating method of the power battery is flexibly adjusted to accommodate the heating requirements under diverse scenarios.

In some embodiments, the power module includes the first battery and the second battery, and the charging and discharging circuit further includes a second regulating switch module. The second regulating switch module is connected between the first battery and the second battery. The first battery is connected to the first heating module, and the second battery is connected to the second heating module.

According to the charging and discharging circuit provided in the embodiments of the present application, the power module includes two battery branches, namely the first battery and the second battery. The two batteries are connected through the second regulating switch module to electrically control the alteration of the connection mode between the battery branches, thus accommodating different charging and discharging requirements in the heating loop, thereby improving the system adaptability of the motors and enhancing the battery heating rate.

In some embodiments, the second regulating switch module is connected between the positive electrode side of the first battery and the positive electrode side of the second battery.

According to the charging and discharging circuit provided in the embodiments of the present application, the first battery and the second battery included in the power module are connected at their positive electrode sides through the second regulating switch module to form a common-negative dual-motor heating topology circuit. On this basis, the circuit loop of the battery branches is controlled through the ON/OFF state of the second regulating switch module, thus accommodating different charging and discharging requirements in the heating loop, thereby improving the system adaptability of the motors and enhancing the battery heating rate.

In some embodiments, the second regulating switch module is connected between the negative electrode side of the first battery and the negative electrode side of the second battery.

According to the charging and discharging circuit provided in the embodiments of the present application, the first battery and the second battery included in the power module are connected at their negative electrode sides through the second regulating switch module to form a common-negative dual-motor heating topology circuit. On this basis, the circuit loop of the battery branches is controlled through the ON/OFF state of the second regulating switch module, thus accommodating different charging and discharging requirements in the heating loop, thereby improving the system adaptability of the motors and enhancing the battery heating rate.

In some embodiments, the first heating module includes a first switch module, and the second heating module includes a second switch module. The positive electrode side of the first battery is connected to an upper bridge arm of the first switch module, and the positive electrode side of the second battery is connected to an upper bridge arm of the second switch module; the negative electrode side of the first battery is connected to the negative electrode side of the second battery, a lower bridge arm of the first switch module, and a lower bridge arm of the second switch module.

According to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

In some embodiments, the first heating module includes a first switch module, and the second heating module includes a second switch module. The positive electrode side of the first battery is connected to an upper bridge arm of the first switch module, and the positive electrode side of the second battery is connected to an upper bridge arm of the second switch module; the negative electrode side of the first battery is connected to the negative electrode side of the second battery, a lower bridge arm of the first switch module, and a lower bridge arm of the second switch module.

According to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

In a second aspect, the present application provides an electric device. The electric device includes a control module and the charging and discharging circuit according to any one of the above. The control module is connected to the first regulating switch module, the first switch module included in the first heating module, and the second switch module included in the second heating module. The control module is configured to regulate the charging and discharging between batteries of the power module.

According to the electric device provided in the embodiments of the present application, the control module and the first regulating switch module of the charging and discharging circuit enable the first energy storage element in one motor set to be connected to the second energy storage element in the other motor set. Thus, in the dual drive motor scenarios, the battery self-heating in a dual-motor configuration can be achieved. By flexibly adjusting the charging and discharging of the power module through regulating the switch modules in the two motor sets, the self-heating method of the power battery is flexibly adjusted to accommodate the heating requirements under diverse scenarios. This enables the flexible adjustment of charging and discharging of the dual drive motors for battery self-heating while reducing costs, thereby meeting the heating requirements under diverse scenarios.

In a third aspect, the present application provides a charging and discharging method applied to the electric device according to the second aspect. The charging and discharging method includes: controlling the first regulating switch module to be turned on in response to a battery heating instruction; and regulating the charging and discharging between batteries of the power module.

According to the charging and discharging method provided in the embodiments of the present application, the first regulating switch module is controlled to be turned on according to the battery heating instruction. In the dual drive motor scenarios, the circuit structure remains unchanged, and the charging and discharging loop between the power battery and the energy storage elements are flexibly regulated to achieve battery self-heating in a dual motor configuration. By flexibly adjusting the charging and discharging of the power module through regulating the first switch module and the second switch module in the two motor sets, the charging and discharging of the dual drive motors can be flexibly adjusted for battery self-heating while reducing costs, thereby enhancing the heating rate.

In some embodiments, the power module includes the first battery and the second battery, and the charging and discharging circuit further includes the second regulating switch module; the second regulating switch module is connected between the first battery and the second battery; regulating the charging and discharging between the batteries of the power module includes: turning off the second regulating switch module; and regulating the charging and discharging between the first battery and the second battery.

According to the charging and discharging method provided in the embodiments of the present application, after turning off the second regulating switch module, the charging and discharging loop between the power battery and the energy storage elements are flexibly regulated to achieve battery self-heating in a dual motor configuration. This enables the charging and discharging of the dual drive motors to be flexibly adjusted for battery self-heating while reducing costs, thereby enhancing the heating rate.

In some embodiments, the power module includes the first battery and the second battery. Regulating the charging and discharging between batteries of the power module includes: controlling the first battery to discharge to the second battery in a first time period; and controlling the second battery to discharge to the first battery in a second time period.

According to the charging and discharging method provided in the embodiments of the present application, by controlling the first battery to discharge to the second battery in the first time period and controlling the second battery to discharge to the first battery in the second time period, the charging and discharging of the dual drive motors can be flexibly adjusted for battery self-heating while reducing costs, thereby enhancing the heating rate.

In some embodiments, controlling the first battery to discharge to the second battery includes: controlling the first battery to discharge to the first energy storage element and the second energy storage element in the first time period; and controlling the first energy storage element and the second energy storage element to discharge to the second battery in the second time period.

The embodiments provided in the present application specifically disclose that: when the first battery is controlled to discharge to the second battery, the first battery is controlled to discharge to the first energy storage element and the second energy storage element in the first time period, and the first energy storage element and the second energy storage element are controlled to discharge to the second battery in the second time period. During the self-heating process of the power module, the continuous self-heating is performed through different control strategies in different time periods. This enables the charging and discharging of the dual drive motors to be flexibly adjusted for battery self-heating, thereby enhancing the heating rate.

In some embodiments, the first heating module includes the first switch module, and the second heating module includes the second switch module. The first switch module includes a first bridge arm group, and the second switch module includes a second bridge arm group. The positive electrode side of the first battery is connected to the upper bridge arm of the first switch module, and the positive electrode side of the second battery is connected to the upper bridge arm of the second switch module; the negative electrode side of the first battery is connected to the negative electrode side of the second battery, the lower bridge arm of the first switch module, and the lower bridge arm of the second switch module. Controlling the first battery to discharge to the second battery includes: controlling an upper bridge arm of any phase in the first bridge arm group and a lower bridge arm of any phase in the second bridge arm group to be turned on in the first time period; and controlling the turned-on lower bridge arm in the second bridge arm group to be turned off and allowing an upper bridge arm corresponding to the turned-off bridge arm to be turned on in the second time period.

According to the charging and discharging method provided in the embodiments of the present application, specifically, during the regulation of the discharge of the first battery to the second battery, the upper bridge arm of any phase in the first bridge arm group and the lower bridge arm of any phase in the second bridge arm group are controlled to be turned on in the first time period, and the turned-on lower bridge arm in the second bridge arm group is controlled to be turned off and the upper bridge arm corresponding to the turned-off bridge arm is allowed to be turned on in the second time period. During the self-heating process of the power module, the continuous self-heating is performed through different control strategies in different time periods.

In some embodiments, the first heating module includes the first switch module, and the second heating module includes the second switch module. The first switch module includes a first bridge arm group, and the second switch module includes a second bridge arm group. The positive electrode side of the first battery is connected to the positive electrode side of the second battery, the upper bridge arm of the first switch module, and the upper bridge arm of the second switch module; the negative electrode side of the first battery is connected to the lower bridge arm of the first switch module, and the negative electrode side of the second battery is connected to the lower bridge arm of the second switch module. Controlling the first battery to discharge to the second battery includes: controlling an upper bridge arm of any phase in the second bridge arm group and a lower bridge arm of any phase in the first bridge arm group to be turned on in the first time period; and controlling the turned-on upper bridge arm in the second bridge arm group to be turned off and allowing a lower bridge arm corresponding to the turned-off bridge arm to be turned on in the second time period.

According to the charging and discharging method provided in the embodiments of the present application, specifically, during the regulation of the discharge of the first battery to the second battery, the upper bridge arm of any phase in the second bridge arm group and the lower bridge arm of any phase in the first bridge arm group are controlled to be turned on in the first time period, and the turned-on upper bridge arm in the second bridge arm group is controlled to be turned off and the lower bridge arm corresponding to the turned-off bridge arm is allowed to be turned on in the second time period. During the self-heating process of the power module, the continuous self-heating is performed through different control strategies in different time periods.

In some embodiments, controlling the second battery to discharge to the first battery includes: controlling the second battery to discharge to the first energy storage element and the second energy storage element in the first time period; and controlling the first energy storage element and the second energy storage element to discharge to the first battery in the second time period.

The embodiments provided in the present application specifically disclose that: when the second battery is controlled to discharge to the first battery, the second battery is controlled to discharge to the first energy storage element and the second energy storage element in the first time period, and the first energy storage element and the second energy storage element are controlled to discharge to the first battery in the second time period. During the self-heating process of the power module, the continuous self-heating is performed through different control strategies in different time periods. This enables the charging and discharging of the dual drive motors to be flexibly adjusted for battery self-heating, thereby enhancing the heating rate.

In some embodiments, the first heating module includes the first switch module, and the second heating module includes the second switch module. The first switch module includes a first bridge arm group, and the second switch module includes a second bridge arm group. The positive electrode side of the first battery is connected to the upper bridge arm of the first switch module, and the positive electrode side of the second battery is connected to the upper bridge arm of the second switch module; the negative electrode side of the first battery is connected to the negative electrode side of the second battery, the lower bridge arm of the first switch module, and the lower bridge arm of the second switch module. Controlling the second battery to discharge to the first battery includes: controlling an upper bridge arm of any phase in the second bridge arm group and a lower bridge arm of any phase in the first bridge arm group to be turned on in the first time period; and controlling the turned-on lower bridge arm in the first bridge arm group to be turned off and allowing an upper bridge arm corresponding to the turned-off bridge arm to be turned on in the second time period.

According to the charging and discharging method provided in the embodiments of the present application, specifically, during the regulation of the discharge of the second battery to the first battery, the upper bridge arm of any phase in the second bridge arm group and the lower bridge arm of any phase in the first bridge arm group are controlled to be turned on in the first time period, and the turned-on lower bridge arm in the first bridge arm group is controlled to be turned off and the upper bridge arm corresponding to the turned-off bridge arm is allowed to be turned on in the second time period. During the self-heating process of the power module, the continuous self-heating is performed through different control strategies in different time periods.

In some embodiments, the first heating module includes the first switch module, and the second heating module includes the second switch module. The first switch module includes a first bridge arm group, and the second switch module includes a second bridge arm group. The positive electrode side of the first battery is connected to the positive electrode side of the second battery, the upper bridge arm of the first switch module, and the upper bridge arm of the second switch module; the negative electrode side of the first battery is connected to the lower bridge arm of the first switch module, and the negative electrode side of the second battery is connected to the lower bridge arm of the second switch module. Controlling the second battery to discharge to the first battery includes: controlling an upper bridge arm of any phase in the first bridge arm group and a lower bridge arm of any phase in the second bridge arm group to be turned on in the first time period; and controlling the turned-on upper bridge arm in the first bridge arm group to be turned off and allowing an upper bridge arm corresponding to the turned-off bridge arm to be turned on in the second time period.

According to the charging and discharging method provided in the embodiments of the present application, specifically, during the regulation of the discharge of the second battery to the first battery, the upper bridge arm of any phase in the first bridge arm group and the lower bridge arm of any phase in the second bridge arm group are controlled to be turned on in the first time period, and the turned-on upper bridge arm in the first bridge arm group is controlled to be turned off and the upper bridge arm corresponding to the turned-off bridge arm is allowed to be turned on in the second time period. During the self-heating process of the power module, the continuous self-heating is performed through different control strategies in different time periods.

In a fourth aspect, the present application provides a computing device. The computing device includes: a storage unit configured to store an executable instruction; and a processor configured to be connected to the storage unit to execute the executable instruction so as to complete the charging and discharging method according to any one of the third aspect.

According to the computing device provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

In a fifth aspect, the present application provides a computer-readable storage medium having a computer program stored thereon. The computer program, when executed by a processor, implements the charging and discharging method according to any one of the third aspect.

According to the computer-readable storage medium provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

### BRIEF DESCRIPTION OF THE DRAWINGS

To more clearly illustrate the technical solutions in embodiments of the present application, the drawings required for illustrating the embodiments of the present application are briefly described below. Apparently, the drawings in the following description illustrate merely some embodiments of the present application, and those of ordinary skill in the art may still derive other drawings from these drawings without creative efforts.
FIG. 1 is a schematic modular diagram of a charging and discharging circuit according to one or more embodiments.
FIG. 2 is a first schematic circuit diagram of a charging and discharging circuit according to one or more embodiments.
FIG. 3 is a second schematic circuit diagram of a charging and discharging circuit according to one or more embodiments.
FIG. 4 is a third schematic circuit diagram of a charging and discharging circuit according to one or more embodiments.
FIG. 5 is a fourth schematic circuit diagram of a charging and discharging circuit according to one or more embodiments.
FIG. 6 is a schematic structural diagram of an electric device according to one or more embodiments.
FIG. 7 is a schematic diagram illustrating the steps of a charging and discharging method according to one or more embodiments.
FIG. 8 is a schematic diagram illustrating the steps of regulating the charging and discharging between batteries of a power module according to one or more embodiments.
FIG. 9 is a schematic diagram illustrating the steps of controlling a first battery to discharge to a second battery according to one or more embodiments.
FIG. 10 is a schematic diagram illustrating the steps of controlling a second battery to discharge to a first battery according to one or more embodiments.
FIG. 11 is a first schematic circuit diagram illustrating the discharge of a first battery to a second battery in a charging and discharging method according to one or more embodiments.
FIG. 12 is a second schematic circuit diagram illustrating the discharge of a first battery to a second battery in a charging and discharging method according to one or more embodiments.
FIG. 13 is a first schematic circuit diagram illustrating the discharge of a second battery to a first battery in a charging and discharging method according to one or more embodiments.
FIG. 14 is a second schematic circuit diagram illustrating the discharge of a second battery to a first battery in a charging and discharging method according to one or more embodiments.
FIG. 15 is a first schematic circuit diagram illustrating the discharge of a first battery to a second battery in a charging and discharging method according to one or more embodiments.
FIG. 16 is a second schematic circuit diagram illustrating the discharge of a first battery to a second battery in a charging and discharging method according to one or more embodiments.
FIG. 17 is a first schematic circuit diagram illustrating the discharge of a second battery to a first battery in a charging and discharging method according to one or more embodiments.
FIG. 18 is a second schematic circuit diagram illustrating the discharge of a second battery to a first battery in a charging and discharging method according to one or more embodiments.
FIG. 19 is a schematic structural diagram of a computing device according to one or more embodiments.

The drawings are not drawn to scale.

### DETAILED DESCRIPTION

Implementations of the present application will be described in further detail with reference to the drawings and embodiments. The following detailed description of the embodiments and the drawings are used for the exemplary illustration of the principles of the present application, but are not intended to limit the scope of the present application. That is, the present application is not limited to the described embodiments.

In the description of the present application, it should be noted that, unless otherwise specified, "a plurality" means two or more; the orientations or positional relationships indicated by the terms "upper", "lower", "left", "right", "inner", "outer", and the like are merely for the convenience of describing the present application and simplifying the description, rather than indicating or implying that the apparatus or element referred to must have a specific orientation or be configured and operated in the specific orientation, and thus should not be construed as limitations to the present application. Furthermore, the terms "first", "second", "third", and the like are used for descriptive purposes only and should not be construed as indicating or implying relative importance. The "perpendicular" is not strictly perpendicular but is within the allowable range of error. The "parallel" is not strictly parallel but is within the allowable range of error.

The following description is given with the directional terms as illustrated in the drawings and is not intended to limit the specific structure of the present application. In the description of the present application, it should further be noted that unless otherwise explicitly specified or defined, the terms "mount", "connect", and "link" should be construed broadly and may be, for example, physical connection, electrical connection, or integrated connection, or indirect connection via an intermediate. For those of ordinary skill in the art, the specific meaning of the above terms in the present application may be interpreted according to the specific condition.

With the development of battery technology, the performance of power modules has been continuously improving, particularly in the aspect of battery self-heating. For the dual drive motor application scenarios, the existing battery self-heating solutions are limited and costly. An urgent challenge lies in reducing the battery heating cost and enhancing the heating rate of large-capacity batteries when controlling and implementing battery heating in dual-motor systems.

In addition, in the dual drive motor application scenarios, the coordinated control of the dual motor control units is crucial for the battery self-heating. It plays a significant role in reducing noise, vibration, and harshness (NVH), mitigating rotor heating issues during the battery heating process, and improving the battery heating rate. These factors are directly related to the usage experience of customers.

In view of this, the embodiments of the present application provide a charging and discharging circuit and method, a computing device and a storage medium thereof. The battery self-heating is achieved by utilizing the alternating current generated in the charging and discharging loop between the dual drive motors and the battery. The present application allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

Specifically, by tapping into the neutral points of the motors and then performing heating control by controlling the switch to be turned on for circuit connection, the number of modification points required for dual-motor heating is reduced, thereby reducing the heating cost and improving the battery heating rate.

Specifically, in the embodiments of the present application, the first heating module and the second heating module may be equivalent to two drive motor sets. By controlling the ON/OFF state of bridge arms of different phases in the switch modules of the motors, the charging and discharging loop between the power battery and the energy storage elements can be flexibly regulated, without altering the original motor structure. This enables the charging and discharging of the dual drive motors to be flexibly adjusted for battery self-heating while reducing costs, thereby enhancing the heating rate. The power module in the embodiments of the present application may include, but is not limited to, a lithium-ion battery, a lithium metal battery, a lead-acid battery, a nickel-cadmium battery, a nickel-hydrogen battery, a lithium-sulfur battery, a lithium-air battery, a sodium-ion battery, or the like. In terms of scale, the battery in the embodiments of the present application may be a single cell, or may be a battery module or a battery pack. In terms of application scenarios, the battery may be used in power apparatuses such as an automobile and a ship. For example, the battery, as the power source of the electric vehicle, can be used in powered vehicles to power the motor. The battery may further supply power to other electric components of the electric vehicle, such as on-board air conditioner and on-board player.

For ease of description, the following will use the application of the power module in new energy vehicles (powered vehicles) as an embodiment for explanation.

The drive motor and control system thereof are one of the core components of the new energy vehicle, and their driving characteristics determine the main performance indicators of the vehicle. The motor driving system of the new energy vehicle is mainly composed of an electric motor (i.e., a motor), a power converter, a motor control unit (such as an inverter), various detection sensors, and a power supply. The motor is a rotating electromagnetic machine that operates based on the principle of electromagnetic induction and is configured to convert electric energy into mechanical energy. During operation, the electrical power is absorbed from the electrical system and the mechanical power is output to the mechanical system.

Optionally, the electric device and the computing device include, but are not limited to, a vehicle, a ship, a spacecraft, or the like.

In the conventional battery heating control strategies, the battery heating process in the prior art faces issues such as low battery heating rate during pulse heating, high temperature of the magnetic steel of the rotor, and excessive vibration and noise. These problems become prominent in the market, degrading the usage experience of customers. Therefore, in contrast, the present application provides a charging and discharging circuit and method, a computing device and a storage medium thereof. By controlling the ON/OFF state of bridge arms of different phases in the switch module, the charging and discharging loop between the power battery and the energy storage element can be flexibly regulated, without altering the original motor structure. This enables the charging and discharging of the dual drive motors to be flexibly adjusted for battery self-heating while reducing costs, thereby enhancing the heating rate.

In principle, the battery heating solution according to the embodiments of the present application can be, in one aspect, based on the battery management system where a plurality of battery branches are connected in parallel for power supply. This requires modifying the physical connection of the batteries, such that the dual battery branches are connected in reverse series during heating. Then, by controlling the ON/OFF states of the switch element, the charging and discharging loop between the power battery and the energy storage elements can be flexibly regulated, thereby enabling the pulse current to circulate between a plurality of battery packs.

The reverse series battery configuration refers to that by reconfiguring the circuit connections, the positive electrode of one battery set is connected to the positive electrode of another battery set, or the negative electrode of one battery set is connected to the negative electrode of another battery set.

In principle, the battery heating solution according to the embodiments of the present application can be, in another aspect, based on the system where a plurality of battery branches independently supply power to the motors. Thus, it is not necessary to change the connection mode between the batteries. By tapping into the neutral points of the dual motors to form a loop connection between two battery packs and utilizing, during heating control, a single-phase current or in-phase currents generated by multi-phase currents to weaken the amplitude of the synthetic magnetic field of the motor produced by the energized stator coils, thus solving the problems of the NVH and rotor heating associated with the conventional motor heating solutions.

For ease of description, in the battery heating solution according to the embodiments of the present application, the dual battery branches of the power battery system include a first battery and a second battery.

The overall description of the implementations in the embodiments of the present application is as follows.

The battery management system (BMS) collects the temperature, state of charge (SOC), voltage, and current signals of the battery pack to determine whether the battery is operating normally and whether the battery meets the conditions for heating; the motor control unit (MCU) collects the voltage and current of the motor to determine whether the motor is in a stationary state; the vehicle control unit (VCU) determines whether to turn on the pulse heating apparatus to heat the battery based on the heating request sent by the BMS and the operating state sent by the MCU.

When the BMS sends a heating request, the VCU determines whether the SOC state of the battery and the operating state of the motor meet the conditions for heating.

Different control modes are applied for specific dual-motor circuit topology structures. Specifically, two types of dual-motor circuit systems are included. One is a dual-motor system where a plurality of battery branches are connected in parallel for power supply, and the other is a dual-motor system where a plurality of battery branches independently supply power to the motors.

For the first scenario where a plurality of battery branches are connected in parallel for power supply, it is necessary to first change the connection mode of the battery packs from parallel connection to reverse series connection mode. For the second structural topology where the battery packs independently supply power to two motor systems, no modification to the battery connection mode is required.

Finally, the MCU controls the ON/OFF state of the first motor control unit switch module and the second motor control unit switch module to realize mutual charging and discharging between the two battery sets, thereby generating heat within the batteries.

During heating, the BMS determines whether the temperature of the battery set is abnormal. If an abnormality is detected, the BMS sends a temperature rise abnormality message to the vehicle control unit, and then the vehicle control unit forwards this temperature rise abnormality message to the MCU. Subsequently, the motor control unit stops operation, and the battery pack is switched back to its initial form.

During heating, the BMS determines whether the temperature of the battery set meets the requirement. If the requirement is met, the vehicle control unit forwards a message of terminating pulse heating during driving to the motor control unit, and then the heating is terminated and the battery pack is switched back to its initial mode. Otherwise, the above heating process is repeated until the desired heating temperature is reached.

The charging and discharging solution according to the embodiments of the present application ameliorates the issue of low battery heating rate in the conventional solution, significantly increasing the temperature rise rate of the battery pack.

According to the charging and discharging circuit and method, and the computing device and the storage medium thereof in some embodiments of the present application, by reusing the second motor driving system, a battery self-heating technology featuring adjustable battery temperature rise rate is achieved with low costs.

The following provides an overall description of the charging and discharging circuit and the charging and discharging principles thereof according to the present application, so as to facilitate a better understanding of the charging and discharging solution in a dual drive motor configuration of the present application.

To make the technical solutions and advantages in the embodiments of the present application more apparent, exemplary embodiments of the present application are further described in detail below with reference to the drawings. Apparently, the described embodiments are merely some embodiments of the present application and do not represent an exhaustive enumeration of all embodiments. It should be noted that unless conflicting, the embodiments and features of the embodiments in the present application may be combined with each other.

For ease of understanding and description, in terms of functions and principles, in the embodiments of the present application, the first heating module and the second heating module may be equivalent to two drive motor sets, the first energy storage element and the second energy storage element may be equivalent to their respective motor windings, and the first switch module and the second switch module may be equivalent to their respective motor control units.

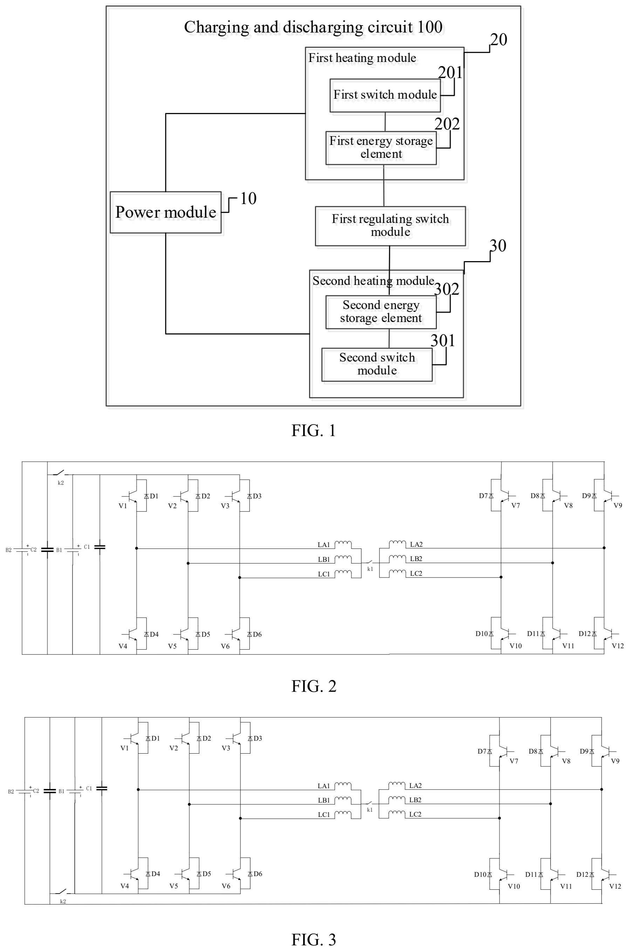

FIG. 1 is a schematic modular diagram of a charging and discharging circuit according to an embodiment of the present application. FIG. 2 is a schematic circuit diagram of a charging and discharging circuit 100 according to an embodiment of the present application.

As shown in FIG. 1, the charging and discharging circuit 100 provided in the present application includes a power module 10, a first heating module 20, a second heating module 30, and a first regulating switch module. The first heating module 20 and the second heating module 30 are both connected to the power module 10; the first heating module 20 includes a first energy storage element 202; the second heating module 30 includes a second energy storage element 302; the power module 10 includes a plurality of battery branches; the first regulating switch module is connected between the first energy storage element 202 and the second energy storage element 302.

Based on this, according to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

The first heating module 20 and the second heating module 30 may be equivalent to two drive motor sets. The first regulating switch module enables the first energy storage element 202 in one motor set to be connected to the second energy storage element 302 in the other motor set. Thus, in the dual drive motor scenarios, the charging and discharging loop between the power battery and the energy storage elements are flexibly regulated to achieve the battery self-heating in a dual-motor configuration. By flexibly adjusting the charging and discharging of the power module 10 through regulating the first switch module 201 and the second switch module 301 in the two motor sets, the self-heating method of the power battery is flexibly adjusted to accommodate the heating requirements under diverse scenarios.

In some embodiments, the first regulating switch module is connected between the neutral point of the motor winding of the first energy storage element 202 and the neutral point of the motor winding of the second energy storage element 302.

According to the embodiments of the present application, the circuit heating control is achieved by tapping into the neutral points of the motors and then turning on the first regulating switch module for circuit connection. This reduces the number of modification points required for dual-motor heating and reduces the heating cost, but also improves the battery heating rate. This also enables the flexible adjustment of charging and discharging of the dual drive motors for battery self-heating while reducing costs, thereby meeting the heating requirements under diverse scenarios.

FIG. 2 is a first schematic circuit diagram of a charging and discharging circuit according to one or more embodiments. FIG. 3 is a second schematic circuit diagram of a charging and discharging circuit according to one or more embodiments.

FIGs. 2 and 3 illustrate charging and discharging circuits based on a power system where a plurality of battery branches independently supply power to the motor.

The power module 10 includes a first battery B1 and a second battery B2 that are connected; the first battery B1 is connected to the first heating module 20, and the second battery B2 is connected to the second heating module 30.

According to the charging and discharging circuit provided in the embodiments of the present application, the first battery B1 and the second battery B2 independently supply power to their respective connected motors during motor operation. The power module 10 includes two battery branches, namely the first battery B1 and the second battery B2. In the dual drive motor scenarios, the charging and discharging loop between the two batteries and the energy storage elements can be flexibly regulated to achieve the battery self-heating in a dual-motor configuration. By flexibly adjusting the charging and discharging of the power module 10 through regulating the first switch module 201 and the second switch module 301 in the two motor sets, the self-heating method of the power battery is flexibly adjusted to accommodate the heating requirements under diverse scenarios.

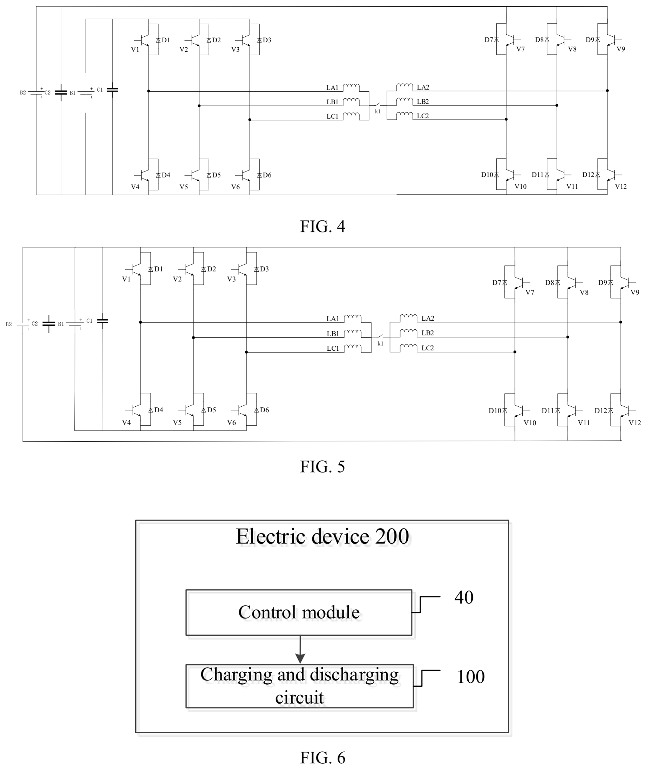

FIG. 4 is a third schematic circuit diagram of a charging and discharging circuit according to one or more embodiments. FIG. 5 is a fourth schematic circuit diagram of a charging and discharging circuit according to one or more embodiments.

As shown in FIGs. 4 and 5, the charging and discharging circuits are based on the power system where a plurality of battery branches are connected in parallel for power supply.

The power module 10 includes a first battery B1 and a second battery B2, and the charging and discharging circuit further includes a second regulating switch module. The second regulating switch module is connected between the first battery B1 and the second battery B2. The first battery B1 is connected to the first heating module 20, and the second battery B2 is connected to the second heating module 30.

According to the charging and discharging circuit provided in the embodiments of the present application, the power module 10 includes two battery branches, namely the first battery B1 and the second battery B2. The two batteries are connected through the second regulating switch module to electrically control the alteration of the connection mode between the battery branches, thus accommodating different charging and discharging requirements in the heating loop, thereby improving the system adaptability of the motors and enhancing the battery heating rate.

As shown in FIG. 4, in some embodiments, the second regulating switch module is connected between the positive electrode side of the first battery B1 and the positive electrode side of the second battery B2.

According to the charging and discharging circuit provided in the embodiments of the present application, the first battery B1 and the second battery B2 included in the power module 10 are connected at their positive electrode sides through the second regulating switch module to form a common-negative dual-motor heating topology circuit. On this basis, the circuit loop of the battery branches is controlled through the ON/OFF state of the second regulating switch module, thus accommodating different charging and discharging requirements in the heating loop, thereby improving the system adaptability of the motors and enhancing the battery heating rate.

As shown in FIG. 5, in some embodiments, the second regulating switch module is connected between the negative electrode side of the first battery B1 and the negative electrode side of the second battery B2.

According to the charging and discharging circuit provided in the embodiments of the present application, the first battery B1 and the second battery B2 included in the power module 10 are connected at their negative electrode sides through the second regulating switch module to form a common-positive dual-motor heating topology circuit. On this basis, the circuit loop of the battery branches is controlled through the ON/OFF state of the second regulating switch module, thus accommodating different charging and discharging requirements in the heating loop, thereby improving the system adaptability of the motors and enhancing the battery heating rate.

The power module 10 may be connected to the dual motors based on the common-negative dual-motor heating topology structure for batteries, as shown in FIGs. 2 and 4. The positive electrode side of the first battery B1 is connected to upper bridge arms of the first switch module 201, and the positive electrode side of the second battery B2 is connected to upper bridge arms of the second switch module 301. The negative electrode side of the first battery B1 is connected to the negative electrode side of the second battery B2, lower bridge arms of the first switch module 201, and lower bridge arms of the second switch module 301.

According to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

The power module 10 may be connected to the dual motors based on the common-positive dual-motor heating topology structure for batteries, as shown in FIGs. 3 and 5. The positive electrode side of the first battery B1 is connected to upper bridge arms of the first switch module 201, and the positive electrode side of the second battery B2 is connected to upper bridge arms of the second switch module 301. The negative electrode side of the first battery B1 is connected to the negative electrode side of the second battery B2, lower bridge arms of the first switch module 201, and lower bridge arms of the second switch module 301.

According to the charging and discharging circuit provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

The circuit further includes three bridge arm groups of the inverter and a neutral connection wire of the motors. As an original component of the electric vehicle, the motor includes three-phase windings.

The differences between the embodiments above are highlighted in the description of these embodiments, and reference may be made to each other for the identical or similar parts. For brevity, details are not described herein again.

FIG. 6 is a schematic structural diagram of an electric device according to one or more embodiments.

As shown in FIG. 6, a control module 40 and the charging and discharging circuit 100 according to any one of the above embodiments are included. The control module 40 is connected to the first regulating switch module, the first switch module 201 included in the first heating module 20, and the second switch module 301 included in the second heating module 30. The control module is configured to regulate the charging and discharging between batteries of the power module 10.

According to the electric device provided in the embodiments of the present application, the control module and the first regulating switch module of the charging and discharging circuit enable the first energy storage element 202 in one motor set to be connected to the second energy storage element 302 in the other motor set. Thus, in the dual drive motor scenarios, the battery self-heating in a dual-motor configuration can be achieved. By flexibly adjusting the charging and discharging of the power module 10 through regulating the switch modules in the two motor sets, the self-heating method of the power battery is flexibly adjusted to accommodate the heating requirements under diverse scenarios. This enables the flexible adjustment of charging and discharging of the dual drive motors for battery self-heating while reducing costs, thereby meeting the heating requirements under diverse scenarios.

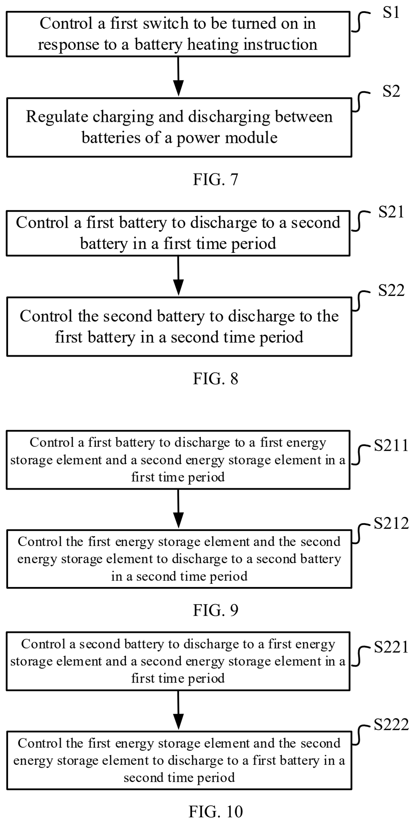

FIG. 7 is a schematic diagram illustrating the steps of a charging and discharging method according to one or more embodiments.

As shown in FIG. 7, the present application provides a charging and discharging method applied to the electric device 200. The method includes:
S1: controlling the first regulating switch module to be turned on in response to a battery heating instruction; and
S2: regulating the charging and discharging between batteries of the power module 10.

According to the charging and discharging method provided in the embodiments of the present application, the first regulating switch module is controlled to be turned on according to the battery heating instruction. In the dual drive motor scenarios, the circuit structure remains unchanged, and the charging and discharging loop between the power battery and the energy storage elements are flexibly regulated to achieve battery self-heating in a dual motor configuration. By flexibly adjusting the charging and discharging of the power module 10 through regulating the first switch module 201 and the second switch module 301 in the two motor sets, the charging and discharging of the dual drive motors can be flexibly adjusted for battery self-heating while reducing costs, thereby enhancing the heating rate.

In some embodiments, regulating the charging and discharging between the batteries of the power module 10 in S2 includes: turning off the second regulating switch module; and regulating the charging and discharging between the first battery B1 and the second battery B2.

According to the charging and discharging method provided in the embodiments of the present application, after turning off the second regulating switch module, the charging and discharging loop between the power battery and the energy storage elements are flexibly regulated to achieve battery self-heating in a dual motor configuration. This enables the charging and discharging of the dual drive motors to be flexibly adjusted for battery self-heating while reducing costs, thereby enhancing the heating rate.

FIG. 8 is a schematic diagram illustrating the steps of regulating the charging and discharging between batteries of a power module 10 according to one or more embodiments.

As shown in FIG. 8, in some embodiments, the power module 10 includes the first battery B1 and the second battery B2. Regulating the charging and discharging between the batteries of the power module 10 in S2 includes:
S21: controlling the first battery B1 to discharge to the second battery B2 in a first time period; and
S22: controlling the second battery B2 to discharge to the first battery B1 in a second time period, where the controlling in the first time period and the controlling in the second time period are continuously and alternately performed.

According to the charging and discharging method provided in the embodiments of the present application, by controlling the first battery B1 to discharge to the second battery B2 in the first time period and controlling the second battery B2 to discharge to the first battery B1 in the second time period, the charging and discharging of the dual drive motors can be flexibly adjusted for battery self-heating while reducing costs, thereby enhancing the heating rate.

FIG. 9 is a schematic diagram illustrating the steps of controlling the first battery B1 to discharge to the second battery B2 according to one or more embodiments.

As shown in FIG. 9, in some embodiments, specifically, controlling the first battery B1 to discharge to the second battery B2 in S21 includes:
S211: controlling the first battery B1 to discharge to the first energy storage element 202 and the second energy storage element 302 in the first time period; and
S212: controlling the first energy storage element 202 and the second energy storage element 302 to discharge to the second battery B2 in the second time period.

The embodiments provided in the present application specifically disclose that: when the first battery B1 is controlled to discharge to the second battery B2, the first battery B1 is controlled to discharge to the first energy storage element 202 and the second energy storage element 302 in the first time period, and the first energy storage element 202 and the second energy storage element 302 are controlled to discharge to the second battery B2 in the second time period. During the self-heating process of the power module 10, the continuous self-heating is performed through different control strategies in different time periods. This enables the charging and discharging of the dual drive motors to be flexibly adjusted for battery self-heating, thereby enhancing the heating rate.

This is applied to the topology circuit, as shown in FIGs. 2 and 4, which is based on the common-negative dual-motor heating topology structure for batteries. The first switch module 201 includes a first bridge arm group, and the second switch module 301 includes a second bridge arm group. Controlling the first battery B1 to discharge to the second battery B2 includes: controlling an upper bridge arm of any phase in the first bridge arm group and a lower bridge arm of any phase in the second bridge arm group to be turned on in the first time period; and controlling the turned-on lower bridge arm in the second bridge arm group to be turned off and allowing an upper bridge arm corresponding to the turned-off bridge arm to be turned on in the second time period.

This is applied to the topology circuit, as shown in FIGs. 3 and 5, which is based on the common-positive dual-motor heating topology structure for batteries. The first switch module 201 includes a first bridge arm group, and the second switch module 301 includes a second bridge arm group. Controlling the first battery B1 to discharge to the second battery B2 includes: controlling an upper bridge arm of any phase in the second bridge arm group and a lower bridge arm of any phase in the first bridge arm group to be turned on in the first time period; and controlling the turned-on upper bridge arm in the second bridge arm group to be turned off and allowing a lower bridge arm corresponding to the turned-off bridge arm to be turned on in the second time period.

FIG. 10 is a schematic diagram illustrating the steps of controlling the second battery B2 to discharge to the first battery B1 according to one or more embodiments.

As shown in FIG. 10, in some embodiments, controlling the second battery B2 to discharge to the first battery B1 in S22 includes:
S221: controlling the second battery B2 to discharge to the first energy storage element 202 and the second energy storage element 302 in the first time period; and
S222: controlling the first energy storage element 202 and the second energy storage element 302 to discharge to the first battery B1 in the second time period.

The embodiments provided in the present application specifically disclose that: when the second battery B2 is controlled to discharge to the first battery B1, the second battery B2 is controlled to discharge to the first energy storage element 202 and the second energy storage element 302 in the first time period, and the first energy storage element 202 and the second energy storage element 302 are controlled to discharge to the first battery B1 in the second time period. During the self-heating process of the power module 10, the continuous self-heating is performed through different control strategies in different time periods. This enables the charging and discharging of the dual drive motors to be flexibly adjusted for battery self-heating, thereby enhancing the heating rate.

This is applied to the topology circuit, as shown in FIGs. 2 and 4, which is based on the common-negative dual-motor heating topology structure for batteries. The first switch module 201 includes a first bridge arm group, and the second switch module 301 includes a second bridge arm group. Controlling the second battery to discharge to the first battery includes: controlling an upper bridge arm of any phase in the second bridge arm group and a lower bridge arm of any phase in the first bridge arm group to be turned on in the first time period; and controlling the turned-on lower bridge arm in the first bridge arm group to be turned off and allowing an upper bridge arm corresponding to the turned-off bridge arm to be turned on in the second time period.

This is applied to the topology circuit, as shown in FIGs. 3 and 5, which is based on the common-positive dual-motor heating topology structure for batteries. The first switch module includes a first bridge arm group, and the second switch module includes a second bridge arm group. Controlling the second battery to discharge to the first battery includes: controlling an upper bridge arm of any phase in the first bridge arm group and a lower bridge arm of any phase in the second bridge arm group to be turned on in the first time period; and controlling the turned-on upper bridge arm in the first bridge arm group to be turned off and allowing an upper bridge arm corresponding to the turned-off bridge arm to be turned on in the second time period.

To further explain the charging and discharging principles in the embodiments of the present application based on the common-negative battery configuration, the dual-motor heating topology structure shown in FIG. 2 where a plurality of battery branches are connected in parallel for power supply is used as an example. For the dual-motor heating principle in the case where a plurality of battery branches independently supply power to the motors, as shown in FIG. 4, reference is made to the principle illustrated in FIG. 2.

The battery management system (BMS) collects the temperature, state of charge (SOC), voltage, and current signals of the battery pack to determine whether the battery is operating normally and whether the battery meets the conditions for heating; the motor control unit (MCU) collects the voltage and current of the motor to determine whether the motor is in a stationary state; the vehicle control unit (VCU) determines whether to turn on the pulse heating apparatus to heat the battery based on the heating request sent by the BMS and the operating state sent by the MCU.

When the BMS sends a heating request, the VCU determines whether the SOC state of the battery and the operating state of the motor meet the conditions for heating.

Different control modes are applied for specific dual-motor circuit topology structures. Specifically, two types of dual-motor circuit systems are included. One is a dual-motor system where a plurality of battery branches are connected in parallel for power supply, and the other is a dual-motor system where a plurality of battery branches independently supply power to the motors.

For the first scenario shown in FIG. 2 where a plurality of battery branches are connected in parallel for power supply, it is necessary to first change the connection mode of the battery packs from parallel connection to reverse series connection mode. For the second structural topology shown in FIG. 4 where the battery packs independently supply power to two motor systems, no modification to the battery connection mode is required.

As shown in FIG. 2, the motor control unit or the BMS controls k2 to turn off, thereby switching the battery from the parallel connection state to the reverse series connection state. In this case, the negative electrodes of the two battery packs are connected, while the positive electrodes thereof are disconnected.

Pulse heating may be divided into four stages. The battery B1 is controlled to charge the battery B2 in the first stage and the second stage. The battery B2 is controlled to charge the battery B1 in the third stage and the fourth stage.

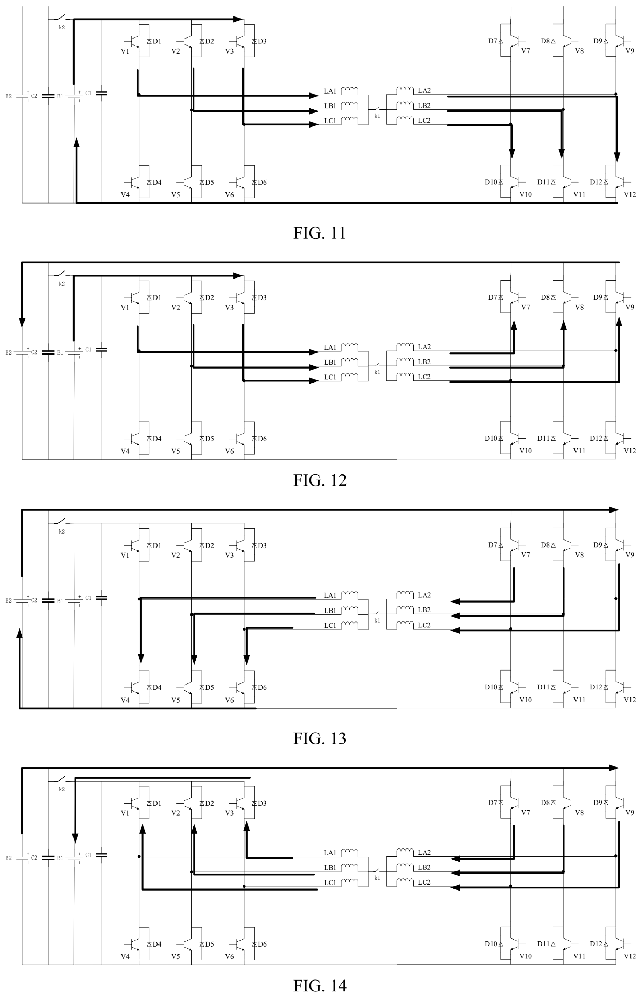

FIG. 11 is a first schematic circuit diagram illustrating the discharge of a first battery to a second battery in a charging and discharging method according to one or more embodiments. FIG. 12 is a second schematic circuit diagram illustrating the discharge of a first battery to a second battery in a charging and discharging method according to one or more embodiments.

As shown in FIG. 11, in the first stage, the upper bridge arms of the first motor control unit and the lower bridge arms of the second motor control unit are controlled to be turned on, the battery B1 is in the discharging state, and the motor inductance stores energy and boosts voltage. In this case, the current path of the battery is as follows: B1 positive → V1, V2, V3 → LA1, LB1, LC1 → LA2, LB2, LC2 → V10, V11, V12 → B1 negative.

As shown in FIG. 12, in the second stage, the upper bridge arms of the first motor control unit and the upper bridge arms of the second motor control are controlled to be turned on, the motor equivalent inductance releases the energy stored in the first stage to the battery B2, and the battery B1 is in the discharging state while the battery B2 is in the charging state. In this case, the current path of the battery is as follows: B1 positive → V1, V2, V3 → LA1, LB1, LC1 → LA2, LB2, LC2 → V7, V8, V9 → B2 negative → B2 positive → B1 negative. Meanwhile, to keep the battery B1 in the discharging state and the battery B2 in the charging state, the duration of the charging of the battery B1 to the battery B2 can be controlled by controlling the time for switching between the upper and lower bridge arms of the second motor control unit.

FIG. 13 is a first schematic circuit diagram illustrating the discharge of a second battery to a first battery in a charging and discharging method according to one or more embodiments. FIG. 14 is a second schematic circuit diagram illustrating the discharge of a second battery to a first battery in a charging and discharging method according to one or more embodiments.

As shown in FIG. 13, in the third stage, the lower bridge arms of the first motor control unit and the upper bridge arms of the second motor control are controlled to be turned on, the battery B2 is in the discharging state, and the motor inductance stores energy and boosts voltage. In this case, the current path of the battery is as follows: B2 positive → V7, V8, V9 → LA2, LB2, LC3 → LA1, LB1, LC1 → V4, V5, V6 → B2 negative.

As shown in FIG. 14, in the fourth stage, the upper bridge arms of the first motor control unit and the upper bridge arm V7 of the second motor control unit are controlled to be turned on, the motor equivalent inductance releases the energy stored in the third stage to the battery B1, and the battery B2 is in the discharging state while the battery B1 is in the charging state. In this case, the current path of the battery is as follows: B2 positive → V7, V8, V9 → LA2, LB2, LC3 → LA1, LB1, LC1 → V1, V2, V3 → B1 positive → B1 negative → B2 negative. Similar to the second stage, the duration of the charging of the battery B2 to the battery B1 can be controlled by controlling the time for switching between the upper bridge arm and lower bridge arm of the first motor control unit.

Optionally, the three-phase currents of the motor may be controlled such that they have the same phase and equal amplitude. This configuration can minimize the linkage of the synthetic magnetic field generated by the energized motor windings to the rotor side, thereby reducing the eddy current loss induced by magnetic field variations in the rotor.

The dual motors may be a permanent magnet motor and an induction motor so as to achieve low-temperature pulse heating. The self-heating control described above may also be performed by supplying three-phase currents to the first motor and supplying only one phase to the second motor. As a result, the second motor changes from its original three-phase parallel inductance configuration to a single-phase inductance configuration during the heating process, increasing the inductance value involved in the energy conversion. Therefore, the change rate of the heating current is reduced, thereby effectively ameliorating the peak value of the heating current on the motor side under the same voltage plateau and control duration.

Finally, during heating, the BMS determines whether the temperature of the battery set is abnormal. If an abnormality is detected, the BMS sends a temperature rise abnormality message to the vehicle control unit, and then the vehicle control unit forwards this temperature rise abnormality message to the MCU. Subsequently, the motor control unit stops operation, and the battery pack is switched back to its initial form.

During heating, the BMS determines whether the temperature of the battery set meets the requirement. If the requirement is met, the vehicle control unit forwards a message of terminating pulse heating during driving to the motor control unit, and then the heating is terminated and the battery pack is switched back to its initial mode. Otherwise, the above heating process is repeated until the desired heating temperature is reached. The charging and discharging solution according to the embodiments of the present application ameliorates the issue of low battery heating rate in the conventional solution, significantly increasing the temperature rise rate of the battery pack.

Next, to further explain the charging and discharging principles in the embodiments of the present application based on the common-positive battery configuration, the dual-motor heating topology structure shown in FIG. 3 where a plurality of battery branches are connected in parallel for power supply is used as an example. For the dual-motor heating principle in the case where a plurality of battery branches independently supply power to the motors, as shown in FIG. 5, reference is made to the principle illustrated in FIG. 3.

The battery management system (BMS) collects the temperature, state of charge (SOC), voltage, and current signals of the battery pack to determine whether the battery is operating normally and whether the battery meets the conditions for heating; the motor control unit (MCU) collects the voltage and current of the motor to determine whether the motor is in a stationary state; the vehicle control unit (VCU) determines whether to turn on the pulse heating apparatus to heat the battery based on the heating request sent by the BMS and the operating state sent by the MCU.

When the BMS sends a heating request, the VCU determines whether the SOC state of the battery and the operating state of the motor meet the conditions for heating. Different control modes are applied for specific dual-motor circuit topology structures. Specifically, two types of dual-motor circuit systems are included. One is a dual-motor system where a plurality of battery branches are connected in parallel for power supply, and the other is a dual-motor system where a plurality of battery branches independently supply power to the motors.

For the first scenario shown in FIG. 3 where a plurality of battery branches are connected in parallel for power supply, it is necessary to first change the connection mode of the battery packs from parallel connection to reverse series connection mode. For the second structural topology shown in FIG. 5 where the battery packs independently supply power to two motor systems, no modification to the battery connection mode is required.

As shown in FIG. 3, the motor control unit or the BMS controls k2 to turn off, thereby switching the battery from the parallel connection state to the reverse series connection state. In this case, the negative electrodes of the two battery packs are connected, while the positive electrodes thereof are disconnected.

Pulse heating may be divided into four stages. The battery B1 is controlled to charge the battery B2 in the first stage and the second stage. The battery B2 is controlled to charge the battery B1 in the third stage and the fourth stage.

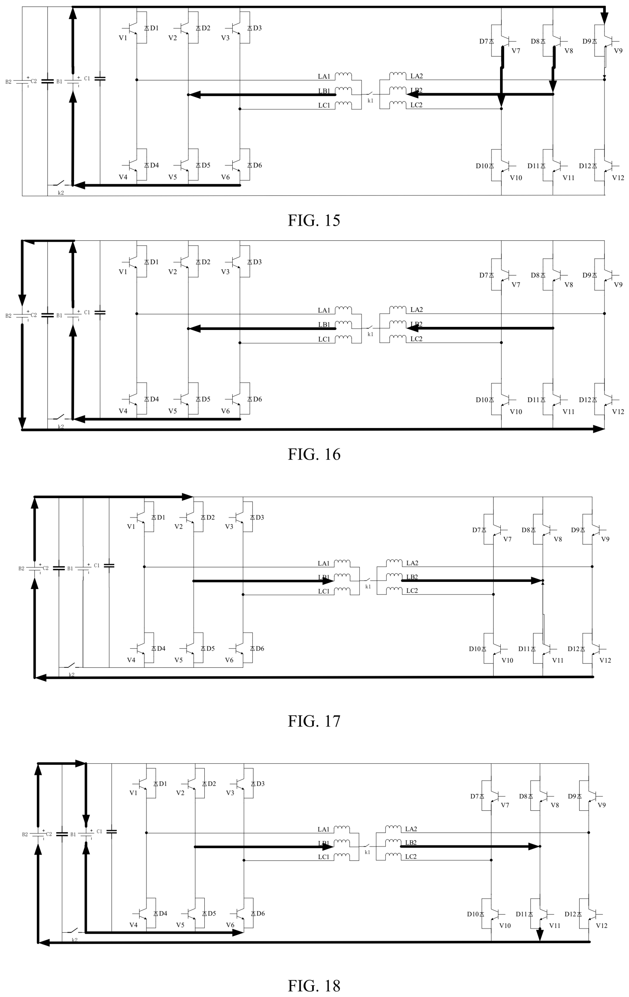

FIG. 15 is a first schematic circuit diagram illustrating the discharge of a first battery to a second battery in a charging and discharging method according to one or more embodiments. FIG. 16 is a second schematic circuit diagram illustrating the discharge of a first battery to a second battery in a charging and discharging method according to one or more embodiments.

As shown in FIG. 15, in the first stage, the upper bridge arm of any phase in the second bridge arm group and the lower bridge arm of any phase in the first bridge arm group are controlled to be turned on, the battery B1 is in the discharging state, and the motor inductance stores energy and boosts voltage. In this case, the current path of the battery is as follows: B1 positive → V7, V8, V9 → LA2, LB2, LC2 → LA1, LB1, LC1 → V4, V5, V6 → B1 negative.

As shown in FIG. 16, in the second stage, the turned-on upper bridge arm in the second bridge arm group is controlled to be turned off and the lower bridge arm corresponding to the turned-off bridge arm is controlled to be turned on, the motor equivalent inductance releases the energy stored in the first stage to the battery B2, and the battery B1 is in the discharging state while the battery B2 is in the charging state. In this case, the current path of the battery is as follows: B1 positive → B2 positive → B1 negative → V10, V11, V12 → LA2, LB2, LC2 → LA1, LB1, LC1 → V4, V5, V6 → B1 negative. Meanwhile, to keep the battery B1 in the discharging state and the battery B2 in the charging state, the duration of the charging of the battery B1 to the battery B2 can be controlled by controlling the time for switching between the upper and lower bridge arms of the second motor control unit.

FIG. 17 is a first schematic circuit diagram illustrating the discharge of a second battery to a first battery in a charging and discharging method according to one or more embodiments. FIG. 18 is a second schematic circuit diagram illustrating the discharge of a second battery to a first battery in a charging and discharging method according to one or more embodiments.

As shown in FIG. 17, in the third stage, the upper bridge arm of any phase in the first bridge arm group and the lower bridge arm of any phase in the second bridge arm group are controlled to be turned on, the battery B2 is in the discharging state, and the motor inductance stores energy and boosts voltage. In this case, the current path of the battery is as follows: B2 positive → V1, V2, V3 → LA1, LB1, LC1 → LA2, LB2, LC3 → V10, V11, V12 → B2 negative.

As shown in FIG. 18, in the fourth stage, the turned-on upper bridge arm in the first bridge arm group is controlled to be turned off and the upper bridge arm corresponding to the turned-off bridge arm is controlled to be turned on, the motor equivalent inductance releases the energy stored in the third stage to the battery B1, and the battery B2 is in the discharging state while the battery B1 is in the charging state. In this case, the current path of the battery is as follows: B2 positive → B1 positive → B1 negative → V4, V5, V6 → LA1, LB1, LC1 → LA2, LB2, LC3 → V10, V11, V12 → B2 negative. Similar to the second stage, the duration of the charging of the battery B2 to the battery B1 can be controlled by controlling the time for switching between the upper bridge arm and lower bridge arm of the first motor control unit.

Optionally, the three-phase currents of the motor may be controlled such that they have the same phase and equal amplitude. This configuration can minimize the linkage of the synthetic magnetic field generated by the energized motor windings to the rotor side, thereby reducing the eddy current loss induced by magnetic field variations in the rotor.

The dual motors may be a permanent magnet motor and an induction motor so as to achieve low-temperature pulse heating. The self-heating control described above may also be performed by supplying three-phase currents to the first motor and supplying only one phase to the second motor. As a result, the second motor changes from its original three-phase parallel inductance configuration to a single-phase inductance configuration during the heating process, increasing the inductance value involved in the energy conversion. Therefore, the change rate of the heating current is reduced, thereby effectively ameliorating the peak value of the heating current on the motor side under the same voltage plateau and control duration.

Finally, during heating, the BMS determines whether the temperature of the battery set is abnormal. If an abnormality is detected, the BMS sends a temperature rise abnormality message to the vehicle control unit, and then the vehicle control unit forwards this temperature rise abnormality message to the MCU. Subsequently, the motor control unit stops operation, and the battery pack is switched back to its initial form.

During heating, the BMS determines whether the temperature of the battery set meets the requirement. If the requirement is met, the vehicle control unit forwards a message of terminating pulse heating during driving to the motor control unit, and then the heating is terminated and the battery pack is switched back to its initial mode. Otherwise, the above heating process is repeated until the desired heating temperature is reached.

The charging and discharging solution according to the embodiments of the present application ameliorates the issue of low battery heating rate in the conventional solution, significantly increasing the temperature rise rate of the battery pack.

In a fourth aspect, the present application provides a computing device. The computing device includes: a storage unit configured to store an executable instruction; and a processor configured to be connected to the storage unit to execute the executable instruction so as to complete the charging and discharging method according to any one of the third aspect.

According to the computing device provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

In a fifth aspect, the present application provides a computer-readable storage medium having a computer program stored thereon. The computer program, when executed by a processor, implements the charging and discharging method according to any one of the third aspect.

According to the computer-readable storage medium provided in the embodiments of the present application, two energy storage elements are connected through the first regulating switch module. Turning on the switch for heating control allows the charging and discharging loop between the power battery and the energy storage elements to be flexibly regulated, without altering the original motor structure. This enables the charging and discharging of the dual drive motors to be flexibly adjusted for battery self-heating while reducing costs, thereby enhancing the heating rate.

The differences between the embodiments above are highlighted in the description of these embodiments, and reference may be made to each other for the identical or similar parts. For brevity, details are not described herein again.

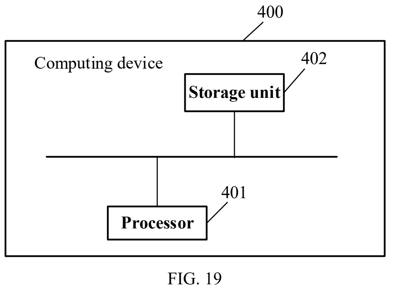

FIG. 19 is a schematic structural diagram of a computing device 400 according to an embodiment of the present application.

As shown in FIG. 19, the computing device 400 includes: a storage unit 402 configured to store an executable instruction; and a processor 401 configured to be connected to the storage unit 402 to execute the executable instruction so as to complete the motion vector prediction method.

It can be understood by those skilled in the art that FIG. 19 merely illustrates an example of the computing device 400 and does not constitute a limitation to the computing device 400, and the computing device may include more or fewer components than those shown in the figure, or may have certain components combined, or may include different components. For example, the computing device 400 may further include an input-output device, a network access device, a bus, and the like.

The processor 401 (central processing unit, CPU) may also be other general-purpose processors, digital signal processors (DSPs), application specific integrated circuits (ASICs), field-programmable gate arrays (FPGAs) or other programmable logic devices, discrete gate or transistor logic devices, discrete hardware components, or the like. The general-purpose processor may be a microprocessor, or the processor 401 may be any conventional processor, or the like. The processor 401, as the control center of the computing device 400, connects all parts of the computing device 400 by using various interfaces and lines.

The storage unit 402 may be configured to store a computer-readable instruction. By running or executing the computer-readable instruction or the module stored in the storage unit 402 and invoking the data stored in the storage unit 402, the processor 401 implements various functions of the computing device 400. The storage unit 402 may primarily include a program storage area and a data storage area. The program storage area may store the operating system, the application program required for at least one function (such as audio playback function or image display function), and the like. The data storage area may store the data created based on the use of the computing device 400, and the like. In addition, the storage unit 402 may include a hard disk, a memory, a plug-in hard disk, a smart media card (SMC), a secure digital (SD) card, a flash card, at least one disk storage device, a flash memory device, a read-only memory (ROM), a random access memory (RAM), or other non-volatile/volatile memory devices.

The modules integrated in the computing device 400 may be stored in a computer-readable storage medium if they are implemented in the form of software function modules and sold or used as independent products. Based on such understandings, all or part of the processes in the methods according to the above embodiments of the present disclosure may also be implemented by executing the computer-readable instruction to instruct the relevant hardware. The computer-readable instruction may be stored in a computer-readable storage medium. The computer-readable instruction, when executed by the processor, may implement the steps in the methods according to the above embodiments.

According to the voltage regulating device for the power module 10 provided in the embodiments of the present application, by controlling the first regulating switch module to connect a first power battery 101 and a second power battery 102 in series or in parallel and controlling the switch module at the same time to regulate the charging and discharging between the power module 10 and the energy storage element 21, the charging and discharging of the power module 10 can be flexibly regulated under diverse scenarios and the battery self-heating method can be flexibly adjusted. When the temperature of the battery or the SOC of the battery is lower than the set temperature, the high-frequency current heating mode is adopted; when the temperature of the battery or the SOC of the battery is higher than the set temperature, the low-frequency current heating mode is adopted.

Finally, the present application further provides a computer-readable storage medium having a computer program stored thereon. The computer program, when executed by the processor, implements the charging and discharging method for the power battery.

Those of ordinary skill in the art will recognize that the units and algorithm steps of various examples described in conjunction with the embodiments disclosed herein can be implemented in electronic hardware, or a combination of computer software and electronic hardware. Whether these functions are performed in hardware or software depends on the particular application and design constraints of the technical solutions. Those skilled in the art may implement the described functions in varying ways for each particular application, but such implementation should not be interpreted as departing from the scope of the present application.

Those skilled in the art may clearly understand that, for the convenience and brevity in the description, reference may be made to the corresponding processes in the aforementioned method embodiments for the specific working processes of the systems, apparatuses, and units described above, and details are not described herein again.

In the several embodiments provided in the present application, it should be understood that the disclosed systems, apparatuses, and methods may be implemented in other ways. For example, the above-described apparatus embodiments are merely illustrative. For example, the division of the units is only a division based on logical function, and it can be implemented in other ways in actual situations. For example, multiple units or components may be combined or integrated into another system, or some features may be omitted or not executed. In addition, the coupling, direct coupling, or communication connection between each other that is shown or discussed may be indirect coupling or communication connection through some interfaces, apparatuses, or units, and it may be in electrical, mechanical, or other forms.

The units described as separate parts may or may not be physically separate, and parts displayed as units may or may not be physical units; that is, they may be located in one place or distributed across a plurality of network units. Some or all of the units may be selected according to actual needs to achieve the purpose of the solutions of the embodiments.

In addition, various functional units in the embodiments of the present application may be integrated into one processing unit, or various units may be physically present separately, or two or more units may be integrated into one unit.

The functions may be stored in a computer-readable storage medium if they are implemented in the form of software functional units and sold or used as independent products. Based on such understandings, the technical solutions of the present disclosure substantially, or the part thereof that contributes to the prior art, or part of the technical solutions, may be embodied in the form of a software product. The computer software product is stored in a storage medium and includes several instructions for causing a computer device (which may be a personal computer, a server, or a network device) to perform all or part of the steps of the methods according to the embodiments of the present application. The aforementioned storage medium includes various media capable of storing program codes, such as a U-disk, a mobile hard disk, a read-only memory (ROM), a random access memory (RAM), a magnetic disk, and an optical disk.

The above descriptions are only embodiments of the present application, but the protection scope of the present application is not limited thereto. Any variations or substitutions that can be easily conceived by those skilled in the art within the technical scope disclosed in the present application shall be covered by the protection scope of the present application. Therefore, the protection scope of the present application shall be subject to the protection scope of the claims described.

## Claims

1. A charging and discharging circuit, comprising a power module, a first heating module, a second heating module, and a first regulating switch module, wherein the first heating module and the second heating module are both connected to the power module;
the first heating module comprises a first energy storage element; the second heating module comprises a second energy storage element;
the power module comprises a plurality of battery branches;
the first regulating switch module is connected between the first energy storage element and the second energy storage element.

2. The charging and discharging circuit according to claim 1, wherein the first regulating switch module is connected between a neutral point of a motor winding of the first energy storage element and a neutral point of a motor winding of the second energy storage element.

3. The charging and discharging circuit according to claim 1 or 2, wherein the power module comprises a first battery and a second battery that are connected; the first battery is connected to the first heating module; the second battery is connected to the second heating module.

4. The charging and discharging circuit according to any one of claims 1-3, wherein the power module comprises the first battery and the second battery, and the charging and discharging circuit comprises a second regulating switch module; the second regulating switch module is connected between the first battery and the second battery; the first battery is connected to the first heating module; the second battery is connected to the second heating module.

5. The charging and discharging circuit according to claim 4, wherein the second regulating switch module is connected between a positive electrode side of the first battery and a positive electrode side of the second battery.

6. The charging and discharging circuit according to claim 4, wherein the second regulating switch module is connected between a negative electrode side of the first battery and a negative electrode side of the second battery.

7. The charging and discharging circuit according to any one of claims 1-5, wherein the first heating module comprises a first switch module, and the second heating module comprises a second switch module;
the positive electrode side of the first battery is connected to an upper bridge arm of the first switch module, and the positive electrode side of the second battery is connected to an upper bridge arm of the second switch module; a negative electrode side of the first battery is connected to a negative electrode side of the second battery, a lower bridge arm of the first switch module, and a lower bridge arm of the second switch module.

8. The charging and discharging circuit according to any one of claims 1-4 and 6, wherein the first heating module comprises a first switch module, and the second heating module comprises a second switch module;
a positive electrode side of the first battery is connected to a positive electrode side of the second battery, an upper bridge arm of the first switch module, and an upper bridge arm of the second switch module; the negative electrode side of the first battery is connected to a lower bridge arm of the first switch module, and the negative electrode side of the second battery is connected to a lower bridge arm of the second switch module.

9. An electric device, comprising a control module and the charging and discharging circuit according to any one of claims 1-8, wherein
the control module is connected to the first regulating switch module, the first switch module comprised in the first heating module, and the second switch module comprised in the second heating module, and the control module is configured to regulate charging and discharging between batteries of the power module.

10. A charging and discharging control method applied to the electric device according to claim 9, comprising:
controlling the first regulating switch module to be turned on in a case that a heating condition is met; and
regulating charging and discharging between batteries of the power module.

11. The method according to claim 10, wherein the power module comprises the first battery and the second battery, and the charging and discharging circuit further comprises the second regulating switch module; the second regulating switch module is connected between the first battery and the second battery; regulating the charging and discharging between the batteries of the power module comprises:
turning off the second regulating switch module; and
regulating the charging and discharging between the first battery and the second battery.

12. The method according to claim 10 or 11, wherein the power module comprises the first battery and the second battery, and regulating the charging and discharging between the batteries of the power module comprises:
controlling the first battery to discharge to the second battery in a first time period; and
controlling the second battery to discharge to the first battery in a second time period;
wherein the controlling in the first time period and the controlling in the second time period are continuously and alternately performed.

13. The method according to claim 12, wherein controlling the first battery to discharge to the second battery comprises:
controlling the first battery to discharge to the first energy storage element and the second energy storage element; and
controlling the first energy storage element and the second energy storage element to discharge to the second battery.

14. The method according to claim 12 or 13, wherein the first heating module comprises the first switch module, and the second heating module comprises the second switch module; the first switch module comprises a first bridge arm group, and the second switch module comprises a second bridge arm group; the positive electrode side of the first battery is connected to the upper bridge arm of the first switch module, and the positive electrode side of the second battery is connected to the upper bridge arm of the second switch module; the negative electrode side of the first battery is connected to the negative electrode side of the second battery, the lower bridge arm of the first switch module, and the lower bridge arm of the second switch module;
controlling the first battery to discharge to the second battery comprises:
controlling an upper bridge arm of any phase in the first bridge arm group and a lower bridge arm of any phase in the second bridge arm group to be turned on; and
controlling the turned-on lower bridge arm in the second bridge arm group to be turned off and allowing an upper bridge arm corresponding to the turned-off bridge arm to be turned on.

15. The method according to claim 12 or 13, wherein the first heating module comprises the first switch module, and the second heating module comprises the second switch module; the first switch module comprises a first bridge arm group, and the second switch module comprises a second bridge arm group; the positive electrode side of the first battery is connected to the positive electrode side of the second battery, the upper bridge arm of the first switch module, and the upper bridge arm of the second switch module; the negative electrode side of the first battery is connected to the lower bridge arm of the first switch module, and the negative electrode side of the second battery is connected to the lower bridge arm of the second switch module;
controlling the first battery to discharge to the second battery comprises:
controlling an upper bridge arm of any phase in the second bridge arm group and a lower bridge arm of any phase in the first bridge arm group to be turned on; and
controlling the turned-on upper bridge arm in the second bridge arm group to be turned off and allowing a lower bridge arm corresponding to the turned-off bridge arm to be turned on.

16. The method according to any one of claims 12-15, wherein controlling the second battery to discharge to the first battery comprises:
controlling the second battery to discharge to the first energy storage element and the second energy storage element; and
controlling the first energy storage element and the second energy storage element to discharge to the first battery.

17. The method according to any one of claims 12-16, wherein the first heating module comprises the first switch module, and the second heating module comprises the second switch module; the first switch module comprises the first bridge arm group, and the second switch module comprises the second bridge arm group; the positive electrode side of the first battery is connected to the upper bridge arm of the first switch module, and the positive electrode side of the second battery is connected to the upper bridge arm of the second switch module; the negative electrode side of the first battery is connected to the negative electrode side of the second battery, the lower bridge arm of the first switch module, and the lower bridge arm of the second switch module;
controlling the second battery to discharge to the first battery comprises:
controlling an upper bridge arm of any phase in the second bridge arm group and a lower bridge arm of any phase in the first bridge arm group to be turned on; and
controlling the turned-on lower bridge arm in the first bridge arm group to be turned off and allowing an upper bridge arm corresponding to the turned-off bridge arm to be turned on.

18. The method according to any one of claims 12-16, wherein the first heating module comprises the first switch module, and the second heating module comprises the second switch module; the first switch module comprises the first bridge arm group, and the second switch module comprises the second bridge arm group; the positive electrode side of the first battery is connected to the positive electrode side of the second battery, the upper bridge arm of the first switch module, and the upper bridge arm of the second switch module; the negative electrode side of the first battery is connected to the lower bridge arm of the first switch module, and the negative electrode side of the second battery is connected to the lower bridge arm of the second switch module;
controlling the second battery to discharge to the first battery comprises:
controlling an upper bridge arm of any phase in the first bridge arm group and a lower bridge arm of any phase in the second bridge arm group to be turned on; and
controlling the turned-on upper bridge arm in the first bridge arm group to be turned off and allowing an upper bridge arm corresponding to the turned-off bridge arm to be turned on.

19. A computing device, comprising:
a storage unit configured to store an executable instruction; and
a processor configured to be connected to the storage unit to execute the executable instruction so as to complete the charging and discharging method according to any one of claims 10-18.

20. A computer-readable storage medium having a computer program stored thereon, wherein the computer program, when executed by a processor, implements the method according to any one of claims 10-18.
